# EUROPEAN PATENT APPLICATION

(11) **EP 4 425 616 A1**
(43) Date of publication of application: **04.09.2024**
(21) Application number: 22886867.5
(22) Date of filing: 20.10.2022
(51) Int. Cl.: H01M 4/62, H01M 4/139

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(30) Priority: 29.10.2021 JP 2021178109
(71) Applicant: Zeon Corporation, Tokyo 100-8246 (JP)
(72) Inventor: SHINTANI Akihiro, Tokyo 100-8246 (JP)
(74) Representative: Maiwald GmbH
(86) International application number: PCT/JP2022/039186
(87) International publication number: WO 2023/074540

(57) **Abstract**

Provided is a binder composition for a non-aqueous secondary battery electrode with which it is possible to produce a slurry composition that has excellent viscosity stability and is capable of producing an electrode having excellent peel strength. The binder composition contains a particulate polymer and water. The particulate polymer includes an aromatic vinyl monomer unit, a conjugated diene monomer unit, and an acidic group-containing monomer unit, wherein an acidic group of the acidic group-containing monomer unit is at least partially in a form of a salt. The particulate polymer has an average particle diameter X according to cumulant method analysis as measured by dynamic light scattering of 140 nm to 300 nm. A particle diameter ratio X/Y calculated as a ratio of the average particle diameter X relative to a volume-average particle diameter Y of the particulate polymer measured by laser diffraction/scattering is 1.05 to 2.00.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

An electrode for a lithium ion secondary battery, for example, generally includes a current collector and an electrode mixed material layer formed on the current collector. The electrode mixed material layer is formed by, for example, applying a slurry composition obtained through mixing of an electrode active material with a binder-containing binder composition and the like onto a current collector and then drying the slurry composition so as to bind the electrode active material, etc. through the binder.

Improvements have previously been made to binders used in the formation of electrode mixed material layers. For example, Patent Literature (PTL) 1 discloses, as a binder, a particulate polymer that includes 50 mass% to 80 mass% of aromatic vinyl monomer units, 20 mass% to 40 mass% of aliphatic conjugated diene monomer units, 0.5 mass% to 10 mass% of ethylenically unsaturated carboxylic acid monomer units, and 0.1 mass% to 3 mass% of (meth)acrylic acid ester monomer units and that has a degree of swelling in THF of a factor of 3 to 10. According to PTL 1, a lithium ion secondary battery can be caused to display excellent cycle characteristics by producing a negative electrode using a binder composition that contains this particulate polymer and water.

### CITATION LIST

### Patent Literature

PTL 1: WO2015/098008A1

### SUMMARY

### (Technical Problem)

It is desirable that a binder composition containing a binder does not cause the viscosity of a slurry composition produced used the binder composition to significantly increase or decrease from designed viscosity straight after production even in a situation in which the slurry composition is stored for a long time (i.e., it is desirable that the binder composition ensures excellent viscosity stability of the slurry composition).

It is also desirable that a binder composition containing a binder causes an electrode mixed material layer obtained using the binder composition to display strong close adherence to a current collector (i.e., it is desirable that the binder composition increases peel strength of an electrode).

There is room for further improvement of a binder composition that contains the conventional binder described above in terms of even further increasing viscosity stability of a slurry composition and peel strength of an electrode.

Accordingly, one object of the present disclosure is to provide a binder composition for a non-aqueous secondary battery electrode with which it is possible to produce a slurry composition that has excellent viscosity stability and is capable of producing an electrode having excellent peel strength.

Another object of the present disclosure is to provide a slurry composition for a non-aqueous secondary battery electrode that has excellent viscosity stability and is capable of producing an electrode having excellent peel strength.

Yet another object of the present disclosure is to provide an electrode for a non-aqueous secondary battery that has excellent peel strength and a non-aqueous secondary battery that includes this electrode.

### (Solution to Problem)

The inventor made extensive studies to achieve the foregoing object. The inventor discovered that by using a binder composition containing water and a particulate polymer having a specific chemical composition and specific particle properties, it is possible to produce a slurry composition having excellent viscosity stability and an electrode having excellent peel strength, and, in this manner, completed the present disclosure.

Specifically, the present disclosure aims to advantageously solve the problems set forth above, and, according to the present disclosure, binder compositions for a non-aqueous secondary battery electrode according to the following [1] to [6], a slurry composition for a non-aqueous secondary battery electrode according to the following [7], an electrode for a non-aqueous secondary battery according to the following [8], and a non-aqueous secondary battery according to the following [9] are provided.
[1] A binder composition for a non-aqueous secondary battery electrode comprising a particulate polymer and water, wherein the particulate polymer includes an aromatic vinyl monomer unit, a conjugated diene monomer unit, and an acidic group-containing monomer unit, an acidic group of the acidic group-containing monomer unit is at least partially in a form of a salt, the particulate polymer has an average particle diameter X according to cumulant method analysis as measured by dynamic light scattering of not less than 140 nm and not more than 300 nm, and a particle diameter ratio X/Y calculated as a ratio of the average particle diameter X relative to a volume-average particle diameter Y of the particulate polymer measured by laser diffraction/scattering is not less than 1.05 and not more than 2.00.

Through a binder composition that contains a particulate polymer having the chemical composition and particle properties set forth above, it is possible to produce a slurry composition having excellent viscosity stability, and it is also possible to produce an electrode having excellent peel strength using this slurry composition.

When a polymer is said to "include a monomer unit" in the present specification, this means that "a polymer obtained using that monomer includes a repeating unit derived from the monomer".

The "particulate polymer" referred to in the present specification is water-insoluble particles that are formed of a polymer. Moreover, when particles are said to be "water-insoluble", this means that when 0.5 g of polymer is dissolved in 100 g of water at a temperature of 25°C, insoluble content is 90 mass% or more.

The "average particle diameter X" of a particulate polymer referred to in the present specification is the hydrodynamic diameter measured by dynamic light scattering and can be measured by a method described in more detail in the EXAMPLES section.

The "volume-average particle diameter Y" of a particulate polymer referred to in the present specification is the particle diameter D50 at which cumulative volume calculated from a small diameter end in a particle diameter distribution (by volume) measured by laser diffraction/scattering reaches 50% and can be measured by a method described in more detail in the EXAMPLES section.

[2] The binder composition for a non-aqueous secondary battery electrode according to the foregoing [1], wherein the conjugated diene monomer unit includes a conjugated diene monomer unit having a carbon number of 4 or 5.

By using a particulate polymer that includes a conjugated diene monomer unit having a carbon number of 4 or 5 as the conjugated diene monomer unit, it is possible to further improve peel strength of an electrode.

[3] The binder composition for a non-aqueous secondary battery electrode according to the foregoing [1] or [2], wherein a binder film formed from the binder composition for a non-aqueous secondary battery electrode displays an elongation rate of 500% or more.

By using a binder composition that displays an elongation rate of 500% or more when in a form of a film, it is possible to further improve peel strength of an electrode.

The "elongation rate" of a binder film referred to in the present specification can be measured by a method described in the EXAMPLES section.

[4] The binder composition for a non-aqueous secondary battery electrode according to any one of the foregoing [1] to [3], wherein proportional content of the aromatic vinyl monomer unit in the particulate polymer is not less than 5 mass% and not more than 40 mass% when all repeating units included in the particulate polymer are taken to be 100 mass%, and proportional content of the conjugated diene monomer unit in the particulate polymer is 20 mass% or more when all repeating units included in the particulate polymer are taken to be 100 mass%.

By using a particulate polymer in which the proportional contents of the aromatic vinyl monomer unit and the conjugated diene monomer unit are within the ranges set forth above, it is possible to even further increase viscosity stability of a slurry composition while also further improving peel strength of an electrode.

The proportional content of a "monomer unit" (repeating unit) in a polymer referred to in the present specification can be measured by a nuclear magnetic resonance (NMR) method such as ¹H-NMR.

[5] The binder composition for a non-aqueous secondary battery electrode according to any one of the foregoing [1] to [4], having a pH of not lower than 6.0 and not higher than 10.0.

By using a binder composition having a pH of not lower than 6.0 and not higher than 10.0, it is possible to even further increase viscosity stability of a slurry composition while also further improving peel strength of an electrode. In addition, degradation of an electrode active material can be inhibited.

[6] The binder composition for a non-aqueous secondary battery electrode according to any one of the foregoing [1] to [5], wherein the acidic group of the acidic group-containing monomer unit is at least partially in a form of an ammonium salt.

By using a particulate polymer in which the acidic group is at least partially in a form of an ammonium salt, it is possible to further improve peel strength of an electrode.

[7] A slurry composition for a non-aqueous secondary battery electrode comprising: an electrode active material; and the binder composition for a non-aqueous secondary battery electrode according to any one of the foregoing [1] to [6].

A slurry composition that contains an electrode active material and any one of the binder compositions set forth above has excellent viscosity stability and can be used to produce an electrode having excellent peel strength.

[8] An electrode for a non-aqueous secondary battery comprising an electrode mixed material layer formed using the slurry composition for a non-aqueous secondary battery electrode according to the foregoing [7].

An electrode that is formed using the slurry composition set forth above has excellent peel strength.

[9] A non-aqueous secondary battery comprising the electrode for a non-aqueous secondary battery according to the foregoing [8].

A secondary battery that includes the electrode set forth above has excellent battery characteristics (for example, cycle characteristics).

### (Advantageous Effect)

According to the present disclosure, it is possible to provide a binder composition for a non-aqueous secondary battery electrode with which it is possible to produce a slurry composition that has excellent viscosity stability and is capable of producing an electrode having excellent peel strength.

Moreover, according to the present disclosure, it is possible to provide a slurry composition for a non-aqueous secondary battery electrode that has excellent viscosity stability and is capable of producing an electrode having excellent peel strength.

Also, according to the present disclosure, it is possible to provide an electrode for a non-aqueous secondary battery that has excellent peel strength and a non-aqueous secondary battery that includes this electrode.

### DETAILED DESCRIPTION

The following provides a detailed description of embodiments of the present disclosure.

A presently disclosed binder composition for a non-aqueous secondary battery electrode can be used in production of a presently disclosed slurry composition for a non-aqueous secondary battery electrode. Moreover, a slurry composition for a non-aqueous secondary battery electrode produced using the presently disclosed binder composition for a non-aqueous secondary battery electrode can be used in production of an electrode of a non-aqueous secondary battery such as a lithium ion secondary battery. Furthermore, a feature of a presently disclosed non-aqueous secondary battery is that it includes a presently disclosed electrode for a non-aqueous secondary battery formed using the presently disclosed slurry composition for a non-aqueous secondary battery electrode.

Note that the presently disclosed binder composition for a non-aqueous secondary battery electrode and slurry composition for a non-aqueous secondary battery electrode are preferably for a negative electrode. Moreover, the presently disclosed electrode for a non-aqueous secondary battery is preferably a negative electrode. Furthermore, the presently disclosed non-aqueous secondary battery is preferably a non-aqueous secondary battery that includes the presently disclosed electrode for a non-aqueous secondary battery as at least a negative electrode.

### (Binder composition for non-aqueous secondary battery electrode)

The presently disclosed binder composition contains a particulate polymer and water, and may optionally further contain components other than the particulate polymer and water (i.e., other components).

### <Particulate polymer>

The particulate polymer is a component that functions as a binder and that in an electrode mixed material layer formed using a slurry composition containing the binder composition, holds components such as an electrode active material so that these components are not shed from the electrode mixed material layer.

The particulate polymer that is contained in the presently disclosed binder composition is required to include an aromatic vinyl monomer unit, a conjugated diene monomer unit, and an acidic group-containing monomer unit. Additional requirements for the particulate polymer are that an acidic group of the acidic group-containing monomer unit is at least partially in a form of a salt, that an average particle diameter X according to cumulant method analysis as measured by dynamic light scattering is not less than 140 nm and not more than 300 nm, and that a particle diameter ratio X/Y calculated as a ratio of the average particle diameter X relative to a volume-average particle diameter Y measured by laser diffraction/scattering is not less than 1.05 and not more than 2.00.

By using the presently disclosed binder composition that contains a particulate polymer having the chemical composition and particle properties set forth above, it is possible to produce a slurry composition having excellent viscosity stability, and it is also possible to produce an electrode having excellent peel strength using this slurry composition.

Although it is not certain why viscosity stability of a slurry composition and peel strength of an electrode are improved by using a particulate polymer having the chemical composition and particle properties set forth above as a binder, the reason for this is presumed to be as follows.

Firstly, a particulate polymer that includes an aromatic vinyl monomer unit having excellent rigidity and a conjugated diene monomer unit having excellent flexibility can function well as a binder and contribute to improving peel strength of an electrode. Moreover, the inclusion of an acidic group-containing monomer unit in a particulate polymer increases dispersibility of that particulate polymer in water and contributes to improving viscosity stability of a slurry composition. However, there have been instances in which viscosity stability of a slurry composition and peel strength of an electrode could not be sufficiently increased even when using a particulate polymer having such a chemical composition.

One reason that these aspects of performance cannot be sufficiently increased is thought to be that during storage of a slurry composition or during formation of an electrode mixed material layer through drying of a slurry composition that has been applied onto a current collector, the particulate polymer may rise up in gaps formed between electrode active material in the slurry composition through capillary action, resulting in a phenomenon in which the particulate polymer becomes concentrated at a liquid surface side of the slurry composition (i.e., at an opposite side to a current collector in a case in which the slurry composition is in an applied state on the current collector).

The inventor and others conducted studies aimed at inhibiting this concentration of the particulate polymer and conceived of a technique of increasing mobility in water of a moiety of the particulate polymer that has relatively high hydrophilicity (hereinafter, referred to as a "hydrophilic moiety") so as to cause three-dimensional spreading out of the particulate polymer and inhibit the particulate polymer from rising up through capillary action. Note that the hydrophilic moiety may be a section where the abundance ratio of acidic group-containing monomer units is relatively high in a particulate polymer obtained through random copolymerization, may be a block section where acidic group-containing monomer units are linked in a particulate polymer obtained through block copolymerization, and/or may be a graft chain section where acidic group-containing monomer units are linked in a particulate polymer obtained through graft polymerization, for example.

According to studies conducted by the inventor, it is possible to increase mobility of a hydrophilic moiety in water and cause three-dimensional spreading out of a particulate polymer through acidic groups of the particulate polymer being at least partially in a form of a salt. The inventor also focused on two types of particle diameters of a particulate polymer: namely an average particle diameter X that is a hydrodynamic diameter measured by dynamic light scattering and a volume-average particle diameter Y that is measured by laser diffraction/scattering. In dynamic light scattering, the appearance of Brownian motion of the particulate polymer is observed as fluctuations of scattered light intensity, and the hydrodynamic diameter is determined based on these observed fluctuations. Accordingly, the average particle diameter X is a particle diameter that strongly reflects mobility of a hydrophilic moiety of the particulate polymer. On the other hand, laser diffraction/scattering is a technique in which particle diameter is determined based on the angle dependence of the intensity of light scattered by the particulate polymer upon irradiation with laser light, and thus the volume-average particle diameter Y is a particle diameter that does not easily reflect mobility of a hydrophilic moiety as compared to the average particle diameter X.

When the average particle diameter X of the particulate polymer measured by dynamic light scattering is not less than 140 nm and not more than 300 nm and when a particle diameter ratio X/Y that is a ratio of the average particle diameter X relative to the volume-average particle diameter Y measured by laser diffraction/scattering is not less than 1.05 and not more than 2.00, the particulate polymer has a size within a range that enables the display of good adhesive capability while also having a suitable degree of three-dimensional spreading out in water, and thus the rising up of the particulate polymer in a slurry composition described above is also inhibited.

In this manner, effects of acidic groups of the particulate polymer being at least partially in a form of a salt, the average particle diameter X according to cumulant method analysis as measured by dynamic light scattering being not less than 140 nm and not more than 300 nm, and the particle diameter ratio X/Y being not less than 1.05 and not more than 2.00 are presumed to act synergistically to inhibit concentration of the particulate polymer, and this is thought to be the reason that viscosity stability of a slurry composition and peel strength of an electrode can be improved by using the presently disclosed binder composition that has the specific chemical composition and particle properties set forth above.

### «Chemical composition»

The particulate polymer includes an aromatic vinyl monomer unit, a conjugated diene monomer unit, and an acidic group-containing monomer unit as previously described. Note that the particulate polymer may optionally include repeating units other than the aromatic vinyl monomer unit, the conjugated diene monomer unit, and the acidic group-containing monomer unit (i.e., other repeating units).

### [Aromatic vinyl monomer unit]

Examples of aromatic monovinyl monomers that can form the aromatic vinyl monomer unit include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. One of these aromatic monovinyl monomers can be used individually, or two or more of these aromatic monovinyl monomers can be used in combination. Of these aromatic monovinyl monomers, styrene is preferable. In other words, it is preferable that the particulate polymer includes a styrene unit as the aromatic vinyl monomer unit.

In a case in which a certain monomer includes both an aromatic vinyl structure and a sulfo group, that monomer is classified as an aromatic vinyl monomer rather than a sulfo group-containing monomer (acidic group-containing monomer) in the present specification.

The proportional content of the aromatic vinyl monomer unit in the particulate polymer when all repeating units included in the particulate polymer are taken to be 100 mass% is preferably 5 mass% or more, more preferably 15 mass% or more, even more preferably 20 mass% or more, and particularly preferably 22.7 mass% or more, and is preferably 40 mass% or less, more preferably 30 mass% or less, even more preferably 24.5 mass% or less, and particularly preferably 24 mass% or less. When the proportional content of the aromatic vinyl monomer unit in the particulate polymer is 5 mass% or more, viscosity stability of a slurry composition can be even further increased. On the other hand, when the proportional content of the aromatic vinyl monomer unit in the particulate polymer is 40 mass% or less, peel strength of an electrode can be further improved.

### [Conjugated diene monomer unit]

Examples of conjugated diene monomers that can form the conjugated diene monomer unit include aliphatic conjugated diene monomers such as isoprene, 1,3-butadiene, 2-methyl-1,3-butadiene, 2,3-dimethyl-1,3-butadiene, 2-chloro-1,3-butadiene, substituted linear conjugated pentadienes, and substituted and branched conjugated hexadienes. One of these conjugated diene monomers can be used individually, or two or more of these conjugated diene monomers can be used in combination. Of these conjugated diene monomers, conjugated diene monomers having a carbon number of 4 or 5 are preferable from a viewpoint of further improving peel strength of an electrode, isoprene and 1,3-butadiene are more preferable, and isoprene is even more preferable. In other words, it is preferable that the particulate polymer includes a conjugated diene monomer unit having a carbon number of 4 or 5 as the conjugated diene monomer unit, more preferable that the particulate polymer includes an isoprene unit and/or a 1,3-butadiene unit as the conjugated diene monomer unit, and even more preferable that the particulate polymer includes an isoprene unit as the conjugated diene monomer unit.

The proportional content of the conjugated diene monomer unit in the particulate polymer when all repeating units included in the particulate polymer are taken to be 100 mass% is preferably 20 mass% or more, more preferably 25 mass% or more, even more preferably 30 mass% or more, further preferably 40 mass% or more, even further preferably 50 mass% or more, and particularly preferably 70.9 mass% or more, and is preferably 80 mass% or less, and more preferably 75 mass% or less. When the proportional content of the conjugated diene monomer unit in the particulate polymer is 20 mass% or more, peel strength of an electrode can be further improved. On the other hand, when the proportional content of the conjugated diene monomer unit in the particulate polymer is 80 mass% or less, viscosity stability of a slurry composition can be even further increased.

### [Acidic group-containing monomer unit]

The acidic group-containing monomer unit may be a carboxy group-containing monomer unit, a sulfo group-containing monomer unit, or a phosphate group-containing monomer unit.

Examples of carboxy group-containing monomers that can form the carboxy group-containing monomer unit include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers that can form the sulfo group-containing monomer unit include styrene sulfonic acid, vinyl sulfonic acid, methyl vinyl sulfonic acid, (meth)allyl sulfonic acid, and 3-allyloxy-2-hydroxypropane sulfonic acid.

In the present specification, "(meth)allyl" is used to indicate "allyl" and/or "methallyl".

Examples of phosphate group-containing monomers that can form the phosphate group-containing monomer unit include 2-(meth)acryloyloxyethyl phosphate, methyl-2-(meth)acryloyloxyethyl phosphate, and ethyl-(meth)acryloyloxyethyl phosphate.

In the present specification, "(meth)acryloyl" is used to indicate "acryloyl" and/or "methacryloyl".

One acidic group-containing monomer can be used individually, or two or more acidic group-containing monomers can be used in combination. Of these acidic group-containing monomers, carboxy group-containing monomers are preferable from a viewpoint of even further increasing viscosity stability of a slurry composition while also further improving peel strength of an electrode, acrylic acid, methacrylic acid, and itaconic acid are more preferable, methacrylic acid and itaconic acid are even more preferable, and methacrylic acid is particularly preferable. In other words, it is preferable that the particulate polymer includes a carboxy group-containing monomer unit as the acidic group-containing monomer unit, more preferable that the particulate polymer includes an acrylic acid unit, a methacrylic acid unit, and/or an itaconic acid unit as the acidic group-containing monomer unit, even more preferable that the particulate polymer includes a methacrylic acid unit and/or an itaconic acid unit as the acidic group-containing monomer unit, and particularly preferable that particulate polymer includes a methacrylic acid unit as the acidic group-containing monomer unit.

As previously described, an acidic group of the acidic group-containing monomer unit included in the particulate polymer is required to be partially or fully in a form of a salt. In a situation in which the acidic group of the acidic group-containing monomer unit included in the particulate polymer is not in a form of a salt, stability of a slurry composition and peel strength of an electrode decrease.

The salt formed by the acidic group is preferably an ammonium salt, a sodium salt, a potassium salt, or a lithium salt from a viewpoint of further improving peel strength of an electrode, and is more preferably an ammonium salt. Note that the salt formed by the acidic group may be one type of salt or may be two or more types of salts.

For example, in a case in which the particulate polymer includes a carboxy group-containing monomer unit as the acidic group-containing monomer unit, it is preferable that a carboxy group (-COOH) of the carboxy group-containing monomer unit is at least partially in a form of one or more selected from the group consisting of an ammonium carboxylate group (-COO⁻NH₄⁺), a sodium carboxylate group (-COO⁻Na⁺), a potassium carboxylate group (-COO⁻K⁺), and a lithium carboxylate group (-COO⁻Li⁺) from a viewpoint of further improving peel strength of an electrode, and more preferable that the carboxy group is at least partially in a form of an ammonium carboxylate group.

Note that examples of techniques for obtaining a particulate polymer in which acidic groups are at least partially in a form of a salt include a technique of using a carboxy group-containing monomer that is in a form of a salt as a monomer in polymerization of the particulate polymer and a technique of adding an alkali component to the particulate polymer after polymerization (i.e., converting an acidic group to the form of a neutralization salt), with the latter of these techniques being preferable.

The proportional content of the acidic group-containing monomer unit in the particulate polymer when all repeating units included in the particulate polymer are taken to be 100 mass% is preferably 2.5 mass% or more, more preferably 3 mass% or more, and even more preferably 3.5 mass% or more, and is preferably 7 mass% or less, and more preferably 6.4 mass% or less. When the proportional content of the acidic group-containing monomer unit in the particulate polymer is within any of the ranges set forth above, viscosity stability of a slurry composition can be even further increased while also further improving peel strength of an electrode.

### [Other repeating units]

Examples of other repeating units that can optionally be included in the particulate polymer include monomer units derived from monomers that are copolymerizable with an aromatic vinyl monomer, a conjugated diene monomer, and an acidic group-containing monomer such as described above without any specific limitations. The particulate polymer may include one type of other repeating unit or may include two or more types of other repeating units.

Note that from a viewpoint of even further increasing viscosity stability of a slurry composition while also further improving peel strength of an electrode, the proportional content of other repeating units in the particulate polymer when all repeating units included in the particulate polymer are taken to be 100 mass% is preferably 10 mass% or less, more preferably 5 mass% or less, even more preferably 1 mass% or less, particularly preferably less than 0.1 mass%, and most preferably 0 mass% (i.e., it is most preferable that the particulate polymer does not include other repeating units).

### «Average particle diameter X»

The average particle diameter X of the particulate polymer according to cumulant method analysis as measured by dynamic light scattering is required to be not less than 140 nm and not more than 300 nm as previously described, is preferably 150 nm or more, more preferably 180 nm or more, and even more preferably 200 nm or more, and is preferably 260 nm or less, and more preferably 250 nm or less. In a situation in which the average particle diameter X is less than 140 nm, viscosity stability of a slurry composition and peel strength of an electrode decrease. On the other hand, in a situation in which the average particle diameter X is more than 300 nm, there is excessive thickening of the binder composition, presumably due to excessive spreading out of the particulate polymer, and it becomes difficult to produce a slurry composition and an electrode.

Note that the average particle diameter X can be adjusted by altering the chemical composition of the particulate polymer and the production method of the particulate polymer. For example, the average particle diameter X can be controlled by altering the proportional content of the acidic group-containing monomer unit that is included in the particulate polymer. The average particle diameter X can also be controlled by, for example, altering the addition method of a monomer (particularly an acidic group-containing monomer) in polymerization, the type of alkali component used for neutralizing the particulate polymer, and the pH of the binder composition after addition of the alkali component.

### «Particle diameter ratio X/Y»

A particle diameter ratio X/Y of the particulate polymer calculated as a ratio of the average particle diameter X measured by dynamic light scattering relative to the volume-average particle diameter Y measured by laser diffraction/scattering is required to be not less than 1.05 and not more than 2.00 as previously described, is preferably 1.10 or more, more preferably 1.20 or more, even more preferably 1.30 or more, and particularly preferably 1.40 or more, and is preferably 1.95 or less, and more preferably 1.93 or less. In a situation in which the particle diameter ratio X/Y is less than 1.05, viscosity stability of a slurry composition and peel strength of an electrode decrease. On the other hand, in a situation in which the particle diameter ratio X/Y is more than 2.00, there is excessive thickening of the binder composition, presumably due to excessive spreading out of the particulate polymer, and it becomes difficult to produce a slurry composition and an electrode.

Note that the particle diameter ratio X/Y of the particulate polymer can be adjusted by controlling a value of the average particle diameter X and/or the volume-average particle diameter Y.

### «Volume-average particle diameter Y»

Although no specific limitations are placed on the volume-average particle diameter Y of the particulate polymer measured by laser diffraction/scattering so long as the particle diameter ratio X/Y described above is within a specific range, the volume-average particle diameter Y is, for example, preferably 100 nm or more, more preferably 110 nm or more, and even more preferably 120 nm or more, and is preferably 250 nm or less, more preferably 200 nm or less, even more preferably 180 nm or less, further preferably 150 nm or less, and particularly preferably 135 nm or less.

Note that the volume-average particle diameter Y can be adjusted by, for example, altering the types and/or amounts of a polymerization initiator and an emulsifier that are used in production of the particulate polymer.

### <Other components>

Examples of components other than the above-described particulate polymer and water that can be contained in the binder composition include, but are not specifically limited to, organic solvents and known additives that can be compounded in binder compositions. One other component can be used individually, or two or more other components can be used in combination.

An antioxidant, a preservative, or the like may be used as an additive without any specific limitations.

The antioxidant may be a hindered phenol antioxidant (for example, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], or 2,4,6-tris(3',5'-di-tert-butyl-4'-hydroxybenzyl)mesitylene), an oligomeric phenolic antioxidant (for example, WINGSTAY^{®} L (WINGSTAY is a registered trademark in Japan, other countries, or both)), a phosphite antioxidant (for example, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, or tris(2,4-di-tert-butylphenyl) phosphite), a sulfuric antioxidant (for example, didodecyl 3,3'-thiodipropionate), or the like, for example.

The amount of the antioxidant that is contained in the binder composition is preferably 0.1 parts by mass or more, and more preferably 1 part by mass or more per 100 parts by mass of the previously described particulate polymer, and is preferably 10 parts by mass or less, and more preferably 5 parts by mass or less per 100 parts by mass of the previously described particulate polymer.

The preservative may be a known preservative such as an isothiazoline compound or 2-bromo-2-nitro-1,3-propanediol, for example. The isothiazoline compound may be any of those described in JP2013-211246A, JP2005-097474A, or JP2013-206624A, for example, without any specific limitations. The preservative is preferably 1,2-benzisothiazolin-3-one, 2-methyl-4-isothiazolin-3-one, 5-chloro-2-methyl-4-isothiazolin-3-one, or 2-bromo-2-nitro-1,3-propanediol, and more preferably 1,2-benzisothiazolin-3-one.

The amount of the preservative that is contained in the binder composition is preferably 0.01 parts by mass or more relative to 100 parts by mass of the previously described particulate polymer, and is preferably 0.5 parts by mass or less, more preferably 0.4 parts by mass or less, and even more preferably 0.3 parts by mass or less relative to 100 parts by mass of the previously described particulate polymer. When the content of the preservative is 0.01 parts by mass or more per 100 parts by mass of the particulate polymer, viscosity stability of a slurry composition can be even further increased. On the other hand, when the content of the preservative is 0.5 parts by mass or less per 100 parts by mass of the particulate polymer, peel strength of an electrode can be sufficiently improved.

### <<Production method of binder composition>>

No specific limitations are placed on the method by which the binder composition is produced. For example, the binder composition can be produced through a step of polymerizing the above-described monomers in water to obtain a water dispersion of a particulate polymer (polymerization step) and a step of adding an alkali component to the water dispersion of the particulate polymer obtained in the polymerization step (alkali addition step). Note that in a situation in which a binder composition containing other components such as previously described is to be produced, no specific limitations are placed on the timing of addition of the other components. For example, in a situation in which an antioxidant and/or a preservative such as previously described are used as other components, these other components are preferably added to the water dispersion of the particulate polymer after the alkali addition step.

### [Polymerization step]

In the polymerization step, at least an aromatic vinyl monomer, a conjugated diene monomer, and an acidic group-containing monomer are polymerized in water (in an emulsion state). Note that the proportion in which each monomer is used can be set in accordance with the proportional content of each monomer unit in the target particulate polymer.

Examples of polymerization methods that can be adopted include a batch emulsion polymerization method, an emulsion (Em) prop method, and a seeded polymerization method, with a batch emulsion polymerization method being preferable. By adopting a batch emulsion polymerization method, it is possible to obtain a particulate polymer having a random structure in which monomer units are uniformly distributed without aromatic vinyl monomer units and conjugated diene monomer units, in particular, becoming unevenly distributed in the particulate polymer.

The batch emulsion polymerization method that can suitably be adopted in the polymerization step may be performed by the following procedure, for example.

First, monomers (aromatic vinyl monomer, conjugated diene monomer, acidic group-containing monomer, and other optional monomers) serving as a basis for monomer units included in the particulate polymer are mixed with water, an emulsifier, and a polymerization initiator. The obtained mixture (emulsion) is then heated to perform a polymerization reaction. At the point at which a specific polymerization conversion rate is reached, cooling is performed to quench the reaction to yield a water dispersion of a particulate polymer. Note that unreacted monomer may be removed from the water dispersion as necessary.

From a viewpoint of efficiently keeping the average particle diameter X and the particle diameter ratio X/Y of the obtained particulate polymer within target ranges, it is preferable to perform split addition of the acidic group-containing monomer into the reaction system in the polymerization step. For example, it is preferable to initiate the polymerization reaction in a state in which all of the aromatic vinyl monomer, all of the conjugated diene monomer, and some of the acidic group-containing monomer are present in the reaction system at the start of the reaction and to supplementarily add the remainder of the acidic group-containing monomer into the reaction system at a stage where the polymerization reaction has progressed to a certain degree. Performing split addition of the acidic group-containing monomer into the reaction system in this manner is presumed to enable the formation of a graft chain by the supplementarily added acidic group-containing monomer with a double bond in a conjugated diene monomer unit that has not been used up in the polymerization reaction as a starting point. Moreover, it is presumed that as a result of the particulate polymer spreading out well in water with such a graft chain formed of acidic group-containing monomer units as a hydrophilic moiety, it is possible to efficiently keep the average particle diameter X and the particle diameter ratio X/Y of the obtained particulate polymer within target ranges.

Note that in split addition of the acidic group-containing monomer with respect to the reaction system, the amount of the acidic group-containing monomer that is supplementarily added when the total amount of the acidic group-containing monomer used in polymerization (i.e., the total of the amount of the acidic group-containing monomer that is present in the reaction system at the start of the reaction and the amount of the acidic group-containing monomer that is supplementarily added) is taken to be 100 mass% is preferably 20 mass% or more, more preferably 30 mass% or more, and even more preferably 40 mass% or more, and is preferably 95 mass% or less, more preferably 90 mass% or less, even more preferably 85 mass% or less, and particularly preferably 80 mass% or less.

Although no specific limitations are placed on the polymerization temperature and the polymerization time, the polymerization temperature can be set within a range of not lower than 25°C and not higher than 90°C, for example, and the polymerization time can be set within a range of not less than 12 hours and not more than 40 hours, for example.

A polymerization initiator and emulsifier such as previously described and a chain transfer agent can optionally be used in the polymerization step.

The polymerization initiator may be potassium persulfate, n-butyllithium, or ammonium persulfate, for example.

The emulsifier may be alkyl diphenyl ether disulfonic acid, dodecylbenzenesulfonic acid, lauryl sulfuric acid, or a salt (for example, a potassium salt or a sodium salt) of any thereof.

The chain transfer agent may be α-methylstyrene dimer, tert-dodecyl mercaptan, or 3-mercapto-1,2-propanediol, for example.

One polymerization initiator, emulsifier, and/or chain transfer agent can be used individually, or two or more polymerization initiators, emulsifiers, and/or chain transfer agents can be used in combination.

### [Alkali addition step]

In the alkali addition step, an alkali component is added to the water dispersion of the particulate polymer obtained through the above-described polymerization step so as to convert an acidic group of the particulate polymer to the form of a salt. The alkali component may be lithium hydroxide, sodium hydroxide, potassium hydroxide, or ammonia, for example. One of these alkali components can be used individually, or two or more of these alkali components can be used in combination. Of these alkali components, ammonia is preferable from a viewpoint of further improving peel strength of an electrode.

Note that although no specific limitations are placed on the method of addition when the alkali component is added to the water dispersion of the particulate polymer, it is preferable that the alkali component is in a form of an aqueous solution when added to the water dispersion.

### «pH of binder composition»

The pH of the binder composition produced as described above is preferably 6.0 or higher, more preferably 7.0 or higher, even more preferably 8.0 or higher, and particularly preferably higher than 9.0, and is preferably 10.0 or lower. When the pH of the binder composition is 6.0 or higher, peel strength of an electrode can be further improved. On the other hand, when the pH of the binder composition is 10.0 or lower, viscosity stability of a slurry composition can be even further increased while also inhibiting degradation of an electrode active material.

### «Elongation rate of binder film»

The elongation rate of a binder film formed from the binder composition is preferably 500% or more, more preferably 600% or more, even more preferably 700% or more, further preferably 800% or more, and particularly preferably 850% or more. When the elongation rate of the binder film is 500% or more, peel strength of an electrode can be further improved, which is presumed to be because the particulate polymer can easily deform and cause good adhesion among an electrode active material in an electrode mixed material layer obtained using the binder composition while also causing the electrode active material to closely adhere strongly to a current collector.

The upper limit for the elongation rate of the binder film is not specifically limited and can be set as 1500% or less, for example.

The elongation rate of the binder film can be adjusted by altering the chemical composition of the particulate polymer. For example, the elongation rate of the binder film can be increased by increasing the proportional content of the conjugated diene monomer unit or decreasing the proportional content of the aromatic vinyl monomer unit in the particulate polymer. In addition, the elongation rate of the binder film can be adjusted by altering the pH of the binder composition. Specifically, the elongation rate of the binder film can be increasing by increasing the pH of the binder composition.

### (Slurry composition for non-aqueous secondary battery electrode)

The presently disclosed slurry composition is a composition that is used for forming an electrode mixed material layer of an electrode and contains at least an electrode active material and the binder composition set forth above. In other words, the presently disclosed slurry composition contains an electrode active material, a particulate polymer, and water, and, as necessary, further contains components (optional components) that can be compounded with an aim such as improving properties of the slurry composition or improving performance of a secondary battery.

As a result of the presently disclosed slurry composition containing the binder composition set forth above, the presently disclosed slurry composition has excellent viscosity stability and an electrode that includes an electrode mixed material layer formed using the slurry composition has excellent peel strength.

### <Electrode active material>

The electrode active material is a material that gives and receives electrons in an electrode of a secondary battery. In a case in which the secondary battery is a lithium ion secondary battery, for example, the electrode active material is normally a material that can occlude and release lithium.

Although the following describes, as one example, a case in which the slurry composition for a non-aqueous secondary battery electrode is a slurry composition for a lithium ion secondary battery electrode, the presently disclosed slurry composition for a non-aqueous secondary battery electrode is not limited to the following example.

### <<Positive electrode active material>>

Examples of positive electrode active materials that can be compounded in a positive electrode mixed material layer of a positive electrode in a lithium ion secondary battery include compounds that include a transition metal such as transition metal oxides, transition metal sulfides, and complex metal oxides of lithium and transition metals, for example. Examples of the transition metal include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), lithium-rich spinel compounds represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

One of the above-described positive electrode active materials can be used individually, or two or more of the above-described positive electrode active materials can be used in combination.

Note that the particle diameter of the positive electrode active material and the amount thereof that is compounded in the slurry composition are not specifically limited and can be the same as for a conventionally used positive electrode active material.

### «Negative electrode active material»

Examples of negative electrode active materials that can be compounded in a negative electrode mixed material layer of a negative electrode in a lithium ion secondary battery include carbon-based negative electrode active materials, metal-based negative electrode active materials, and negative electrode active materials that are combinations thereof.

The term "carbon-based negative electrode active material" refers to an active material that has carbon as a main framework allowing insertion (also referred to as "doping") of lithium. Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

One of the above-described negative electrode active materials can be used individually, or two or more of the above-described negative electrode active materials can be used in combination.

Note that the particle diameter of the negative electrode active material and the amount thereof that is compounded in the slurry composition are not specifically limited and can be the same as for a conventionally used negative electrode active material.

### <Binder composition containing particulate polymer>

The presently disclosed binder composition for a non-aqueous secondary battery electrode set forth above can be used as the binder composition.

No specific limitations are placed on the amount of the binder composition that is used in production of the slurry composition. For example, the amount of the binder composition that is compounded can be set as an amount such that, in terms of solid content, the amount of the particulate polymer originating from the binder composition is not less than 0.5 parts by mass and not more than 15 parts by mass per 100 parts by mass of the electrode active material.

### <Optional components>

Examples of optional components that the presently disclosed slurry composition can contain besides the electrode active material, the particulate polymer, and water include antioxidants, preservatives, and organic solvents such as previously described in the "Binder composition for non-aqueous secondary battery electrode" section, and also thickeners such as carboxymethyl cellulose and salts thereof, conductive materials such as carbon black, and metal scavengers. One optional component can be used individually, or two or more optional components can be used in combination.

### <Production method of slurry composition>

The slurry composition can be produced by using a known mixing method to mix the electrode active material, the binder composition, and optional components that are used as necessary.

Note that no specific limitations are placed on the mixing method, and the mixing can be performed using a typically used stirrer or disperser. Moreover, in production of the slurry composition, water may be further added separately to water originating from the binder composition.

### (Electrode for non-aqueous secondary battery)

The presently disclosed electrode includes an electrode mixed material layer formed using the slurry composition set forth above. The electrode mixed material layer is normally a dried product of the slurry composition. Consequently, the electrode mixed material layer contains at least an electrode active material and a polymer component (binder) derived from a particulate polymer, and contains optional components as necessary. It should be noted that components contained in the electrode mixed material layer are components that were contained in the slurry composition set forth above and that the preferred ratio of these components in the electrode mixed material layer is the same as the preferred ratio of these components in the slurry composition. Also note that although the particulate polymer is present in a particulate form in the slurry composition, the particulate polymer may have a particulate form or may have any other form in the electrode mixed material layer that is formed using the slurry composition.

The presently disclosed electrode has excellent peel strength as a result of the electrode mixed material layer being formed using the slurry composition set forth above.

### <Production method of electrode>

The presently disclosed electrode can be produced using any one of the following methods (1) to (3), for example.
(1) A method in which the slurry composition is applied onto the surface of a current collector and is then dried
(2) A method in which a current collector is immersed in the slurry composition and is then dried
(3) A method in which the slurry composition is applied onto a releasable substrate and is dried to produce an electrode mixed material layer that is then transferred onto the surface of a current collector

Of these methods, method (1) described above is particularly preferable in terms of enabling simple control of the thickness of the electrode mixed material layer. In more detail, the above-described method (1) includes a step of applying the slurry composition onto a current collector (application step) and a step of drying the slurry composition that has been applied onto the current collector to form an electrode mixed material layer on the current collector (drying step).

### «Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials can be used individually, or two or more of these materials can be used in combination.

### <<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. This pressing process can improve peel strength of the electrode and enables further densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed secondary battery includes the presently disclosed electrode set forth above. For example, the presently disclosed secondary battery may include a positive electrode, a negative electrode, an electrolyte solution, and a separator and may have the presently disclosed electrode set forth above as at least one of the positive electrode and the negative electrode.

Although the following describes, as one example, a case in which the secondary battery is a lithium ion secondary battery, the presently disclosed secondary battery is not limited to the following example.

### <Electrodes>

Any known electrode that is used in production of a secondary battery can be used without any specific limitations as an electrode other than the presently disclosed electrode set forth above that can be used in the presently disclosed secondary battery. Specifically, an electrode obtained by forming an electrode mixed material layer on a current collector by a known production method can be used as an electrode other than the presently disclosed electrode set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. Note that one electrolyte can be used individually, or two or more electrolytes can be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used include carbonates such as dimethyl carbonate (DMC), ethylene carbonate, (EC), diethyl carbonate, (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives can be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In the presently disclosed secondary battery, the electrode for a secondary battery set forth above is used as at least one of the positive electrode and the negative electrode. The presently disclosed secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the proportional content of each monomer unit in a particulate polymer, the average particle diameter X, volume-average particle diameter Y, and particle diameter ratio X/Y of a particulate polymer, the elongation rate of a binder film formed from a binder composition, the viscosity stability of a slurry composition, and the peel strength of a negative electrode.

### <Proportional content of each monomer unit>

An intensity ratio of peaks originating from various monomer units was determined by ¹H-NMR and was converted to a mass ratio. Note that in calculation of the mass ratio, a carboxy group of a carboxy group-containing monomer unit was taken to be -COOH in the calculation even in a case in which the carboxy group was in a form of a salt.

### <Average particle diameter X>

A binder composition was adjusted to a solid content concentration of 0.5% through addition of deionized water to obtain a measurement sample. A particle size analyzer (produced by Otsuka Electronics Co., Ltd.; product name: nanoSAQLA) having dynamic light scattering as a measurement principle was used to perform cumulant method analysis with respect to the measurement sample to determine an average particle diameter X (cumulant average particle diameter).

Note that the measurement conditions of dynamic light scattering were as follows.
Measurement temperature: 25 ± 1°C
Scattering angle: 168.8°
Light source laser wavelength: 660 nm

### <Volume-average particle diameter Y>

A laser diffraction particle size analyzer (produced by Shimadzu Corporation; product name: SALD-2300) was used to measure a particle size distribution (by volume) of a binder composition (water dispersion of a particulate polymer). The particle diameter D50 at which cumulative volume calculated from a small diameter end of the distribution reached 50% was taken to be a volume-average particle diameter Y.

### <Particle diameter ratio X/Y>

The value of the average particle diameter X was divided by the value of the volume-average particle diameter Y to calculate a particle diameter ratio X/Y.

### <Elongation rate>

A binder composition was dried in a 23°C environment such as to have a thickness of 400 µm to 600 µm and was then punched out with a No. 2 dumbbell shape prescribed by JIS K 6251 2017 to obtain a test specimen. An elongation rate of this test specimen was measured using a universal material testing machine (produced by Toyo Seiki Seisaku-Sho, Ltd.; product name: STROGRAPH E3-L). Specifically, the test specimen was stretched in a long axis direction of the test specimen at a tensing rate of 200 mm/min in a 23°C environment so as to break the test specimen. The length of the test specimen in the long axis direction prior to stretching was taken to be L₀, the length of the test specimen in the long axis direction at the point of breaking was taken to be L₁, and an elongation rate was calculated (= L₁/L₀ × 100(%)).

### <Viscosity stability>

A B-type viscometer (produced by Toki Sangyo Co., Ltd.; product name: TVB-10; rotor: No. 2; rotation speed: 60 rpm) was used to measure the viscosity η₀ of a slurry composition. Next, the slurry composition that had undergone viscosity measurement was stirred for 24 hours using a planetary mixer (rotation speed: 60 rpm), and the viscosity η₁ of the slurry composition after stirring was measured using the same type of B-type viscometer as described above (rotor: No. 2; rotation speed: 60 rpm). A viscosity maintenance rate Δη of the slurry composition between before and after stirring was calculated (Δη = η₁/η₀ × 100(%)), and viscosity stability of the slurry composition was evaluated by the following standard. Note that the temperature during viscosity measurement was 25°C. A value of closer to 100% for the viscosity maintenance rate Δη indicates that the slurry composition has better viscosity stability.
A: Viscosity maintenance rate Δη of not less than 90% and not more than 110%
B: Viscosity maintenance rate Δη of not less than 80% and less than 90%
C: Viscosity maintenance rate Δη of less than 80% or more than 110%

### <Peel strength>

A negative electrode was dried in a 100°C vacuum dryer for 1 hour, and then the dried electrode was cut out as a rectangle of 100 mm in length and 10 mm in width to obtain a test specimen. The test specimen was placed with the surface of the electrode mixed material layer facing downward, and cellophane tape was affixed to the surface of the electrode mixed material layer. Tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. Three measurements were made in this manner. An average value of the measurements was determined, and this average value was evaluated by the following standard as the peel strength. A larger peel strength indicates larger binding force of the negative electrode mixed material layer to the current collector, and thus indicates greater close adherence strength.
A: Peel strength of 10 N/m or more.
B: Peel strength of not less than 7 N/m and less than 10 N/m
C: Peel strength of less than 7 N/m

### (Example 1)

### <Production of binder composition (batch emulsion polymerization)>

A 5 MPa pressure-resistant vessel A equipped with a stirrer was charged with 24 parts of styrene as an aromatic vinyl monomer, 72 parts of isoprene as a conjugated diene monomer, 1 part of methacrylic acid as an acidic group-containing monomer, 0.6 parts of alkyl diphenyl ether disulfonic acid salt as an emulsifier, 143 parts of deionized water, and 0.3 parts of potassium persulfate as a polymerization initiator. These materials were thoroughly stirred and were then heated to 55°C to initiate polymerization. Next, the materials were heated to 65°C and were caused to react. Thereafter, 3 parts of methacrylic acid was added, and the materials were heated to 85°C and were caused to react. Unreacted monomer was subsequently removed by thermal-vacuum distillation to yield a water dispersion of a particulate polymer.

Ammonia aqueous solution (ammonia concentration: 1%) containing ammonia as an alkali component was added to the obtained water dispersion of the particulate polymer such that the pH was adjusted to 9.5. Thereafter, the water dispersion was cooled, and 1 part of a WINGSTAY L dispersion was added as an antioxidant to yield a binder composition. The obtained binder composition had a pH of 9.5, and carboxy groups of the particulate polymer in the binder composition were in a form of an ammonium salt (i.e., were ammonium carboxylate groups).

The obtained binder composition was used to measure the average particle diameter X and volume-average particle diameter Y of the particulate polymer and the elongation rate of a binder film. The particle diameter ratio X/Y of the particulate polymer was also calculated. The results are shown in Table 1.

### <Production of slurry composition>

A planetary mixer equipped with a disper blade was charged with 100 parts of artificial graphite (tap density: 0.85 g/cm³; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. The binder composition produced as described above, in an amount of 1.5 parts in terms of solid content of the particulate polymer, and deionized water were added to the obtained mixed liquid, and the final solid content concentration was adjusted to 48%. A further 10 minutes of mixing was performed, and then defoaming was performed under reduced pressure to yield a slurry composition for a negative electrode having good fluidity.

Viscosity stability was evaluated for the obtained slurry composition for a negative electrode. The result is shown in Table 1.

### <Production of negative electrode>

The slurry composition for a negative electrode obtained as described above was applied onto copper foil of 15 µm in thickness serving as a current collector by a comma coater such as to have a coating weight after drying of 11 mg/cm². The slurry composition for a negative electrode was dried by conveying the copper foil inside a 60°C oven for 2 minutes at a speed of 0.5 m/min. Thereafter, 2 minutes of heat treatment was performed at 120°C to obtain a negative electrode web. The negative electrode web was rolled by roll pressing to obtain a negative electrode having a negative electrode mixed material layer density of 1.75 g/cm³.

Peel strength was evaluated for the obtained negative electrode. The result is shown in Table 1.

### (Example 2)

A slurry composition and a negative electrode were prepared and various evaluations were performed in the same way as in Example 1 with the exception that a binder composition produced as described below was used. The results are shown in Table 1.

### <Production of binder composition (batch emulsion polymerization)>

A 5 MPa pressure-resistant vessel A equipped with a stirrer was charged with 22.7 parts of styrene as an aromatic vinyl monomer, 70.9 parts of isoprene as a conjugated diene monomer, 2.6 parts of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 3.8 parts of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Example 3)

A slurry composition and a negative electrode were prepared and various evaluations were performed in the same way as in Example 1 with the exception that a binder composition produced as described below was used. The results are shown in Table 1.

### <Production of binder composition (batch emulsion polymerization)>

A 5 MPa pressure-resistant vessel A equipped with a stirrer was charged with 22.7 parts of styrene as an aromatic vinyl monomer, 72.8 parts of isoprene as a conjugated diene monomer, 2.6 parts of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 1.9 parts of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Example 4)

A slurry composition and a negative electrode were prepared and various evaluations were performed in the same way as in Example 1 with the exception that a binder composition produced as described below was used. The results are shown in Table 1.

### <Production of binder composition (batch emulsion polymerization)>

A 5 MPa pressure-resistant vessel A equipped with a stirrer was charged with 24.5 parts of styrene as an aromatic vinyl monomer, 72.5 parts of isoprene as a conjugated diene monomer, 1 part of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 2 parts of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Example 5)

A binder composition, a slurry composition, and a negative electrode were prepared and various evaluations were performed in the same way as in Example 2 with the exception that isoprene was changed to 1,3-butadiene in production of the binder composition. The results are shown in Table 1.

### (Example 6)

A binder composition, a slurry composition, and a negative electrode were prepared and various evaluations were performed in the same way as in Example 1 with the exception that ammonia aqueous solution was changed to sodium hydroxide aqueous solution in production of the binder composition. The results are shown in Table 1.

### (Comparative Example 1)

A slurry composition and a negative electrode were prepared and various evaluations were performed in the same way as in Example 1 with the exception that a binder composition produced as described below was used. The results are shown in Table 1.

### <Production of binder composition (batch emulsion polymerization)>

A 5 MPa pressure-resistant vessel A equipped with a stirrer was charged with 25 parts of styrene as an aromatic vinyl monomer, 73 parts of 1,3-butadiene as a conjugated diene monomer, 1 part of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 1 part of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Comparative Example 2)

A slurry composition and a negative electrode were prepared and various evaluations were performed in the same way as in Example 1 with the exception that a binder composition produced as described below was used. The results are shown in Table 1.

### <Production of binder composition (batch emulsion polymerization)>

A 5 MPa pressure-resistant vessel A equipped with a stirrer was charged with 49 parts of styrene as an aromatic vinyl monomer, 49 parts of 1,3-butadiene as a conjugated diene monomer, 1 part of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 1 part of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Comparative Example 3)

Production of a slurry composition was attempted in the same way as in Example 1 with the exception that a binder composition produced as described below was used. However, excessive thickening of the binder composition occurred, and it was not possible to produce a slurry composition that could be applied well onto a current collector. Consequently, viscosity stability of a slurry composition and peel strength of a negative electrode could not be evaluated. Results for the average particle diameter X, volume-average particle diameter Y, and particle diameter ratio X/Y of a particulate polymer and the elongation rate of a binder film, which were measured or calculated in the same way as in Example 1, are shown in Table 1.

### <Production of binder composition (batch emulsion polymerization)>

A 5 MPa pressure-resistant vessel A equipped with a stirrer was charged with 21 parts of styrene as an aromatic vinyl monomer, 69 parts of 1,3-butadiene as a conjugated diene monomer, 1 part of methacrylic acid as an acidic group-containing monomer, 0.6 parts of alkyl diphenyl ether disulfonic acid salt as an emulsifier, 143 parts of deionized water, and 0.1 parts of potassium persulfate as a polymerization initiator. These materials were thoroughly stirred and were then heated to 55°C to initiate polymerization. Next, the materials were heated to 65°C and were caused to react. Thereafter, 9 parts of methacrylic acid was added, and the materials were heated to 85°C and were caused to react. Unreacted monomer was subsequently removed by thermal-vacuum distillation to yield a water dispersion of a particulate polymer. Subsequent operations were performed in the same way as in Example 1 to yield a binder composition.

### (Comparative Example 4)

A binder composition, a slurry composition, and a negative electrode were prepared and various evaluations were performed in the same way as in Example 1 with the exception that ammonia aqueous solution was not added in production of the binder composition. The results are shown in Table 1.

In Table 1, shown below:
"St" indicates styrene unit;
"IP" indicates isoprene unit;
"BD" indicates 1,3-butadiene unit;
"MAA" indicates methacrylic acid unit;
"NH₄⁺" indicates ammonium salt;
"Na⁺" indicates sodium salt; and
"X/Y" indicates particle diameter ratio X/Y.

Note that values for the particle diameter ratio X/Y are rounded at the third decimal place and are recorded as values to the second decimal place in Table 1.

**[Table 1]**

| | | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|---|
| Binder composition | Particulate polymer | Aromatic vinyl monomer unit | Type | St | St | St | St | St | St | St | St | St | st |
| | | | Proportion [mass%] | 24 | 22.7 | 22.7 | 24.5 | 22.7 | 24 | 25 | 49 | 21 | 24 |
| | | Conjugated diene monomer unit | Type | IP | IP | IP | IP | BD | IP | BD | BD | BD | BD |
| | | | Proportion [mass%] | 72 | 70.9 | 72.8 | 72.5 | 70.9 | 72 | 73 | 49 | 69 | 72 |
| | | Acidic group-containing monomer unit | Type | MAA | MAA | MAA | MAA | MAA | MAA | MAA | MAA | MAA | MAA |
| | | | Proportion [mass%] | 4 | 6.4 | 4.5 | 3 | 6.4 | 4 | 2 | 2 | 10 | 4 |
| | | | Salt | NH₄⁺ | NH₄⁺ | NH₄⁺ | NH₄⁺ | NH₄⁺ | Na⁺ | NH₄⁺ | NH₄⁺ | NH₄⁺ | - |
| | | Volume-average particle diameter Y [nm] | | 130 | 130 | 130 | 130 | 130 | 130 | 130 | 130 | 130 | 130 |
| | | Average-particle diameter X [nm] | | 230 | 250 | 230 | 150 | 250 | 230 | 130 | 130 | 350 | 130 |
| | | X/Y [-] | | 1.77 | 1.92 | 1.77 | 1.15 | 1.92 | 1.77 | 1.00 | 1.00 | 2.69 | 1.00 |
| | Elongation rate [%] | | | 900 | 900 | 900 | 800 | 700 | 900 | 800 | 200 | 900 | 400 |
| | pH [-] | | | 9.5 | 9.5 | 9.5 | 9.5 | 9.5 | 9.5 | 9.5 | 9.5 | 9.5 | 4 |
| Peel strength | | | | A | A | A | B | B | B | B | C | - | C |
| Viscosity stability | | | | A | A | A | A | A | A | C | C | - | C |

It can be seen from Table 1 that a slurry composition having excellent viscosity stability and a negative electrode having excellent peel strength can be produced using the binder compositions of Examples 1 to 6.

In contrast, it can be seen that viscosity stability of a slurry composition decreases in Comparative Example 1 in which the used binder composition contains a particulate polymer having an average particle diameter X and a particle diameter ratio X/Y that are less than specific values.

Moreover, it can be seen that viscosity stability of a slurry composition and peel strength of a negative electrode decrease in Comparative Example 2 in which the used binder composition contains a particulate polymer having an average particle diameter X and a particle diameter ratio X/Y that are less than specific values.

Furthermore, it can be seen that excessive thickening occurred and that a slurry composition that could be applied well onto a current collector could not be produced as previously described with the binder composition of Comparative Example 3, which contains a particulate polymer having an average particle diameter X and a particle diameter ratio X/Y that exceed specific values.

Also, it can be seen that viscosity stability of a slurry composition and peel strength of a negative electrode decrease in Comparative Example 4 in which the used binder composition contains a particulate polymer that has an average particle diameter X and a particle diameter ratio X/Y that are less than specific values and in which a carboxy group of a carboxy group-containing monomer unit is not in a form of a salt.

### INDUSTRIAL APPLICABILITY

According to the present disclosure, it is possible to provide a binder composition for a non-aqueous secondary battery electrode with which it is possible to produce a slurry composition that has excellent viscosity stability and is capable of producing an electrode having excellent peel strength.

Moreover, according to the present disclosure, it is possible to provide a slurry composition for a non-aqueous secondary battery electrode that has excellent viscosity stability and is capable of producing an electrode having excellent peel strength.

Also, according to the present disclosure, it is possible to provide an electrode for a non-aqueous secondary battery that has excellent peel strength and a non-aqueous secondary battery that includes this electrode.

## Claims

1. A binder composition for a non-aqueous secondary battery electrode comprising a particulate polymer and water, wherein
the particulate polymer includes an aromatic vinyl monomer unit, a conjugated diene monomer unit, and an acidic group-containing monomer unit,
an acidic group of the acidic group-containing monomer unit is at least partially in a form of a salt,
the particulate polymer has an average particle diameter X according to cumulant method analysis as measured by dynamic light scattering of not less than 140 nm and not more than 300 nm, and
a particle diameter ratio X/Y calculated as a ratio of the average particle diameter X relative to a volume-average particle diameter Y of the particulate polymer measured by laser diffraction/scattering is not less than 1.05 and not more than 2.00.

2. The binder composition for a non-aqueous secondary battery electrode according to claim 1, wherein the conjugated diene monomer unit includes a conjugated diene monomer unit having a carbon number of 4 or 5.

3. The binder composition for a non-aqueous secondary battery electrode according to claim 1, wherein a binder film formed from the binder composition for a non-aqueous secondary battery electrode displays an elongation rate of 500% or more.

4. The binder composition for a non-aqueous secondary battery electrode according to claim 1, wherein
proportional content of the aromatic vinyl monomer unit in the particulate polymer is not less than 5 mass% and not more than 40 mass% when all repeating units included in the particulate polymer are taken to be 100 mass%, and
proportional content of the conjugated diene monomer unit in the particulate polymer is 20 mass% or more when all repeating units included in the particulate polymer are taken to be 100 mass%.

5. The binder composition for a non-aqueous secondary battery electrode according to claim 1, having a pH of not lower than 6.0 and not higher than 10.0.

6. The binder composition for a non-aqueous secondary battery electrode according to claim 1, wherein the acidic group of the acidic group-containing monomer unit is at least partially in a form of an ammonium salt.

7. A slurry composition for a non-aqueous secondary battery electrode comprising: an electrode active material; and the binder composition for a non-aqueous secondary battery electrode according to any one of claims 1 to 6.

8. An electrode for a non-aqueous secondary battery comprising an electrode mixed material layer formed using the slurry composition for a non-aqueous secondary battery electrode according to claim 7.

9. A non-aqueous secondary battery comprising the electrode for a non-aqueous secondary battery according to claim 8.
